# EUROPÄISCHE PATENTANMELDUNG

(11) **EP 0 848 252 A2**
(43) Veröffentlichungstag der Anmeldung: **17.06.1998**
(21) Anmeldenummer: 97121111.5
(22) Anmeldetag: 02.12.1997
(51) Int. Cl.: G01N 27/64

(54) **Ionenmobilitätsspektrometer**

(30) Priorität: 06.12.1996 DE 19650612
(71) Anmelder: DAIMLER-BENZ AKTIENGESELLSCHAFT, 70567 Stuttgart (DE)
(72) Erfinder: Breit, Ulrich, 81735 München (DE)

(57) **Zusammenfassung**

Das Ionenmobilitätsspektrometer weist ein Ionentor auf, das aus einem scheibenförmigen, anisotrop ätzbaren ersten Teilstück hergestellt ist, sowie eine Driftkammer, die aus mindestens zwei scheibenförmigen zweiten Teilstücken hergestellt ist, welche die Seitenwände bilden und von denen mindestens eines eine Gasdurchlaßöffnung aufweist, und einen Ionenkollektor, der aus einem scheibenförmigen dritten Teilstück hergestellt ist, wobei das Ionentor und der Ionenkollektor an gegenüberliegenden Stirnflächen der Driftkammer angeordnet sind.

## Beschreibung

Die Erfindung betrifft ein Ionenmobilitätsspektrometer mit einem Ionentor, einer Driftkammer und einem Ionenkollektor.

Ein Ionenmobilitätsspektrometer der o.g. Art ist beispielsweise in EP 0 046 699 oder in US 4 390 784 beschrieben und basiert im wesentlichen darauf, daß in der Driftkammer Ionen unter dem Einfluß eines elektrostatischen Feldes zum Ionenkollektor wandern. Die Driftzeit ist für verschiedene Ionen unterschiedlich und wird von deren Beweglichkeit bestimmt. Die bekannten Ionenmobilitätsspektrometer weisen einen Driftkammerquerschnitt von mehreren Zentimetern und Driftstrecken bis zu 40 cm auf Die Abmessungen und der hohe Preis derartiger Geräte beschränken die Art und die Zahl der für dieses Meßverfahren zugänglichen Anwendungen.

Es wurde deshalb versucht, Ionenmobilitätsspektrometer zu miniaturisieren (s. International Journal of Environmental Analytical Chemistry, 1993, Vol. 52, Seiten 189 bis 193). Eine Realisierung des darin vorgestellten Konzeptes erwies sich jedoch als schwierig bzw. unmöglich, da die Anforderungen an die einzelnen Komponenten nur schwer oder nicht erfüllbar sind. Insbesondere für die technische Realisierung eines miniaturisierten Ionentores finden sich in dem o.g. Artikel keine Hinweise.

Es ist deshalb Aufgabe der vorliegenden Erfindung, ein Konzept für ein miniaturisierbares Ionenmobilitätsspektrometer zu schaffen, welches mit den geläufigen Methoden, insb. aus der Halbleiterfertigung, herstellbar ist, so daß die bekannten Geräte sowohl in Größe als auch Herstellungskosten deutlich unterboten werden können.

Diese Aufgabe wird durch ein Ionenmobilitätsspektrometer (IMS) mit den Merkmalen des Patentanspruchs 1 gelöst.

Die wesentlichen Teile des IMS, nämlich das Ionentor, die Drifikammer und der Ionenkollektor bestehen aus im wesentlichen scheibenförmigen Teilstücken, welche entweder anisotrop ätzbar oder mit Methoden der Mikromechanik bearbeitbar sind und durch Klemmen, Kleben oder sonstige an sich bekannte Fügeverfahren miteinander verbunden werden. In der einfachsten Form besteht die Driftkammer aus zwei scheibenförmigen Teilstücken, von denen in die eine eine durchgehende Nut geätzt oder gefräst ist, welche mit dem anderen glatten Teilstück abgedeckt wird; auf diese Weise entsteht ein Driftkanal. Die beiden Enden des Driftkanales sind auf der einen Seite durch ein gitterförmiges Ionentor verschlossen, welches ebenfalls durch Ätzen oder Fräsen aus einem scheibenförmigen Teilstück hergestellt wurde. Die gegenüberliegende Seite des Driftkanals ist durch den Ionenkollektor verschlossen, der ebenfalls aus einem scheibenförmigen, auf der Innenseite elektrisch leitfähigen Teilstück hergestellt ist.

Auf diese Weise läßt sich ein IMS mit einem Driftkammerquerschnitt von weniger als 1 cm und einer Länge von etwa 4 cm herstellen, also Dimensionen, die etwa 1/10 der bisher üblichen Geräteabmessungen entsprechen. Auch die Ionisierungskammer, die unmittelbar an das Ionentor anschließt, kann in gleicher Weise hergestellt sein.

Aufgrund der geringen Abmessungen der Driftkammer fallen die Meßimpulse bei geeigneter Ansteuerung des Ionentores nahezu deltaförmig aus, so daß eine Nachweisgrenze führ spezifische Ionen im ppm-Bereich erzielt werden kann. Die Leistungsaufnahme des Gerätes kann dabei unter 2 Watt gehalten werden.

Aufgrund der Miniaturisierung, des geringen Energiebedarfs und letztlich des Preises, kann das IMS zur Drogen- oder Gefahrstoffdetektion im mobilen Einsatz zur Anwendung kommen oder auch z.B. als Kontrolleinrichtung an Hochspannungsschaltern, welche mit Schutzgas (SF₆) gefüllt sind, dessen Konzentration ständig überwacht werden muß damit kann auf das häufige Wechseln des Schutzgases verzichtet werden.

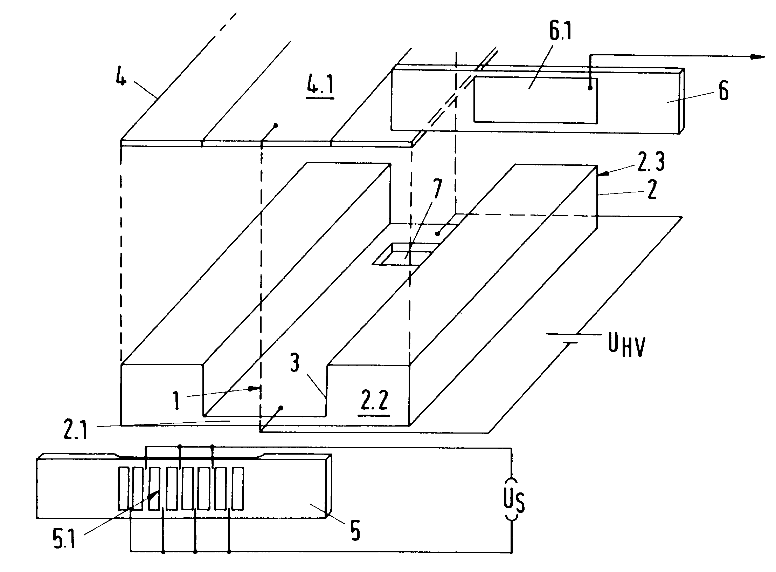

Die Erfindung wird im folgenden anhand des in der Figur teilweise schematisch dargestellten Ausführungsbeispieles näher beschrieben. Hierin ist in einer Explosionszeichnung der Aufbau einer Driftkammer für ein IMS dargestellt. Der Driftkanal 1 wird dabei im wesentlichen durch eine etwa 1mm starke und 40 mm lange Siliziumscheibe 2 gebildet, in welche eine Nut 3 eingeätzt oder -gefräst wurde derart, daß von der Siliziumscheibe 2 noch eine die untere Seitenwand 2.1 des Driftkanals 1 bildende Schicht mit einer Dicke von etwa 20µ erhalten bleibt. Die obere Seitenwand des Driftkanals 1 wird durch eine Abdeckplatte 4 aus Silizium gebildet, die bündig auf den verbleibenden Oberflächen der Scheibe 2 aufgesetzt und mit diesen verliebt ist. Die Vorderseite der Driftkammer 1 wird durch eine Siliziumscheibe 5 abgeschlossen, in welche im Bereich der Driftkammer ein gasdurchlässiges Gitter 5.1 eingeätzt ist, wobei die einzelnen Gitterstäbe beispielsweise durch Metallisierung elektrisch leitend sind und jeweils die übernächsten Gitterstäbe elektrisch miteinander verbunden sind. Diese das Ionentor bildende Siliziumscheibe 5 wird auf die Stirnfläche 2.2 der Siliziumscheibe 2 aufgeklebt.

Die Rückseite der Driftkammer 1 ist durch eine Siliziumscheibe 6 abgeschlossen, welche im Bereich des Driftkanals ebenfalls elektrisch leitend ist und als Ionenkollektor dient. Diese Siliziumscheibe 6 ist mit der Stirnfläche 2.3 des Siliziumscheibe2 verklebt.

Im Boden 2.1 der Siliziumscheibe 2 ist in der Nähe des Ionenkollektors 6 eine Öffnung 7 eingeätzt, welche als Durchlaßöffnung für das Driftgas dient.

Zur Erzeugung eines möglichst störungsfreien und homogenen Driftfeldes sind sowohl der Boden 2.1 der Siliziumscheibe 2 als auch derjenige Teil 4.1 der Siliziumscheibe 4, welche die Decke der Driftkammer bildet, mit einer hochohmigen Widerstandsschicht versehen, wobei diese Schichten vorzugsweise an den Außenwänden der Materialien aufgebracht sind, um chemische Beeinflussungen durch das Driftgas oder die Ionen zu vermeiden. Anstelle von aufgebrachten Widerstandsschichten könnten auch die Siliziumscheiben in den Bereichen 2.1 und 4.1 durch Dotierung die für den Feldaufbau erforderliche elektrische Leitfähigkeit erhalten. Das Driftfeld wird dann durch eine externe Spannung U_{HV} von etwa 2000 V, welche an die Enden der leitfähigen Schichten von 2.1 und 4.1 angelegt wird, erzeugt.

Das Driftgas kann in der Driftkammer 1, je nach Erfordernissen, entweder von der Öffnung 7 zu dem Ionentor 5 und dort durch die Gitterstäbe 5.1 strömen, oder in entgegengesetzter Richtung. Die Ionen der zu messenden Probe werden in einer nicht dargestellen Ionenisierungskammer erzeugt, welche im wesentlichen in der gleichen miniaturisierten Bauweise wie die Driftkammer hergestellt sein kann und auf die Frontseite des Ionentores 5 aufgesetzt ist. Das Gitter 5.1 des Ionentores 5 wird dann durch eine Spannung U_{S} in bekannter Weise angesteuert, d.h. , wenn zwischen benachbarten Gitterstäben jeweils ein Potential anliegt, so sperrt das Ionentor; wenn kein Potential anliegt, so ist das Ionentor für die Ionen aus der Ionisierungskammer durchlässig und werden in dem Driftkanal durch das Feld der Spannung U_{HV} in Richtung auf den Ionenkollektor 6 beschleunigt, wo sie auf die Sammelplatte 6.1 auftreffen und dort ein elektrisches Signal erzeugen, welches in bekannter Weise ausgewertet wird.

Zur Erzeugung einer gleichmäßigen Strömung des Driftgases ist es vorteilhaft, wenn die Durchlaßöffnung 7 im Querschnitt etwa dem durchströmten Querschnitt des Driftkanals 1 entspricht.

Ein größerer Driftkanalquerschnitt läßt sich beispielsweise dadurch erzielen, daß anstelle einer ebenen Deckplatte 4 ein zur Siliziumscheibe 2 symmetrisches Teil mit einer deckungsgleichen Nut aufgesetzt ist und die Siliziumscheiben 5 und 6 des Ionentores bzw. Ionenkollektors entsprechend vergrößert werden, so daß sie den dann doppelt so hohen Driftkanal 1 abdecken.

Anstelle von Siliziummaterial lassen sich für die Komponenten der Driftkammer selbstverständlich auch andere entweder anisotrop ätzbare oder mit mikromechanischen Mitteln bearbeitbare Materialien, z.B. Galliumarsenit, Glas u. dgl. verwenden.

## Patentansprüche

1. Ionenmobilitätsspektrometer mit einem Ionentor, einer Driftkammer und einem Ionenkollektor **dadurch gekennzeichnet,**
daß das Ionentor aus einem scheibenförmigen, anisotrop ätzbaren ersten Teilstück hergestellt ist,
daß die Driftkammer aus mindestens zwei scheibenförmigen zweiten Teilstücken hergestellt ist, welche die Seitenwände bilden und von denen mindestens eines eine Gasdurchlaßöffnung aufweist,
daß der Ionenkollektor aus einem scheibenförmigen dritten Teilstück hergestellt ist und
daß das Ionentor und der Ionenkollektor an gegenüberliegenden Stirnflächen der Driftkammer angeordnet sind.

2. Ionenmobilitätsspektrometer nach Anspruch 1, **dadurch gekennzeichnet,** daß zumindest ein Teilstück der Driftkammer aus einem scheibenförmigen Körper mit mindestens zwei gegenüberliegenden ebenen Stirnflächen und mindestens einer ebenen Seitenoberfläche besteht, und, daß in der Scheibenoberfläche eine durchgehende Nut von einer Stirnfläche zur anderen verläuft.

3. Ionenmobilitätsspektrometer nach Anspruch 1 oder 2, **dadurch gekennzeichnet,** daß das Ionentor als gasdurchlässiges Gitter mit nebeneinander und parallel zueinander angeordneten, eleketrisch leitfähigen Gitterstäben ausgebildet ist, wobei jeder Gitterstab gegenüber den unmittelbar benachbarten Gitterstäben elektrisch isoliert ist.

4. Ionenmobilitätsspektrometer nach Anspruch 3, **dadurch gekennzeichnet,** daß jeder Gitterstab mit dem jeweils übernächsten Gitterstab elektrisch verbunden ist.

5. Ionenmobilitätsspektrometer nach einem der Ansprüche 1 bis 4, **dadurch gekennzeichnet,** daß auf der, der Driftkammer gegenüberliegenden Seite des Ionentores eine Ionisierungskammer angeordnet ist, welche aus mindestens zwei scheibenförmigen Teilstücken hergestellt ist.

6. Ionenmobilitätsspektrometer nach einem der Ansprüche 1 bis 5, **dadurch gekennzeichnet,** daß aufmindestens zwei gegenüberliegenden Seiteninnenwänden der Driftkammer eine gleichmäßige Widerstandsschicht oder streifenförmige Leiterbahnen, welche über eine gestufte Widerstandskette miteinander verbunden sind, angeordnet sind.

7. Ionenmobilitätsspektrometer nach Anspruch 1, **dadurch gekennzeichnet,** daß die Fläche der Gasdurchlaßöffnung gleich der durchströmten Querschnittsfläche der Driftkammer ist.

8. Ionenmobilitätsspektrometer nach einem Ansprüche 1 bis 7, **dadurch gekennzeichnet,** daß das Ionentor, die Driftkammer und/oder der Ionenkollektor aus monokristallinen Silizium- und/oder Galium-Arsenit-Scheiben hergestellt sind.
